# EUROPÄISCHE PATENTSCHRIFT

(11) **EP 4 504 502 B1**
(45) Veröffentlichungstag und Bekanntmachung des Hinweises auf die Patenterteilung: **17.06.2026**
(21) Anmeldenummer: 23721263.4
(22) Anmeldetag: 04.04.2023
(51) Int. Cl.: B30B 1/32, B30B 15/16, B30B 15/26, B21D 24/10, B21D 28/00, B21D 5/00, G05B 19/4097

(54) **UMFORMMASCHINE ZUM UMFORMEN VON WERKSTÜCKEN SOWIE EIN VERFAHREN HIERFÜR**
FORMING MACHINE FOR FORMING WORKPIECES AND METHOD THEREFOR
MACHINE DE FORMAGE DESTINÉE AU FAÇONNAGE DE PIÈCES ET PROCÉDÉ ASSOCIÉ

(30) Priorität: 05.04.2022 AT 502172022
(43) Veröffentlichungstag der Anmeldung: 12.02.2025
(73) Patentinhaber: TRUMPF Maschinen Austria GmbH & Co. KG., 4061 Pasching (AT)
(72) Erfinder: SPACHINGER, Gregor, 4073 Wilhering (AT)
(74) Vertreter: Burger, Hannes Alfred
(86) Internationale Anmeldenummer: PCT/AT2023/060110
(87) Internationale Veröffentlichungsnummer: WO 2023/193035

(56) Entgegenhaltungen:
- EP-B1- 1 837 169
- WO-A1-2006/101156
- US-A1- 2013 152 661
- US-A1- 2015 033 963

## Beschreibung

Die Erfindung betrifft Umformmaschine zum Umformen von Werkstücken gemäß dem Oberbegriff des Anspruch 1. Eine solche Unformmaschine entsprechend dem Oberbegriff des Anspruchs 1 ist in US2015033963A1 offenbart.

Zur Erzeugung der erforderlichen Presskraft bei Umformmaschinen bedarf es eines Antriebsstranges, welcher üblicherweise mehrere Antriebskomponenten umfasst. Bei Biegepressen werden als Antriebskomponenten meist ein Motor, eine vom Motor angetrieben Hydraulikpumpe und ein mit der Hydraulikpumpe in Wirkverbindung stehender Zylinder verwendet. Im Stand der Technik besteht der Nachteil, dass der Energieverbrauch eines solchen Antriebssystems - über viele Bearbeitungszyklen betrachtet - sehr hoch ist. Es besteht daher der Bedarf, den Energieverbrauch zu reduzieren und eine Umformmaschine zu schaffen, die energieeffizienter und daher kostengünstiger betrieben werden kann. Eine solche Umformmaschine soll bevorzugt mit einfachen und nachhaltigen Maßnahmen ausgestattet werden können. Die Bearbeitungsqualität für die umzuformenden Werkstücke soll dabei unverändert hoch bleiben. Diese Aufgabe wird durch eine Umformmaschine und ein Verfahren zum Betreiben einer

Umformmaschine gemäß den Ansprüchen gelöst.

Die erfindungsgemäße Vorrichtung betrifft somit eine Umformmaschine zum Umformen von Werkstücken gemäß dem unabhängigen Anspruch 1.

Durch die Einstellbarkeit der Antriebsparameter - je nach Anwendungsfall - sowie das Vorsehen einer Optimierungs-Routine für die Auswahl und/oder Ermittlung geeigneter Antriebsparameter für verschiedene Anwendungsfälle kann die Energieeffizienz und damit auch der Wirkungsgrad des Antriebssystems erhöht werden. Durch die erfindungsgemäße Maßnahme wird somit eine unnötige Verschwendung von Energie verhindert.

Die Optimierungs-Routine ist eingerichtet, für jeden Anwendungsfall eine - hinsichtlich des Wirkungsgrades - optimale Kombination aus Antriebsparametern der ersten und zweiten Antriebskomponente auszuwählen und/oder zu ermitteln. Dies bedeutet, dass die Optimierungs-Routine für unterschiedliche Anwendungsfälle (die z.B. durch die Eigenschaften des Werkstückes und/oder durch die zu erzielende Umformung definiert sind) unterschiedliche Antriebsparameter vorgibt, mit denen in der Folge die jeweiligen Antriebskomponenten (von der Steuerung) angesteuert werden.

Die Optimierungs-Routine ist in der Steuerung der Umformmaschine hinterlegt und kann in Form eines Programms und/oder eines Algorithmus ausgebildet sein. Die Routine kann verschiedene Eingangsgrößen, durch die der Anwendungsfall charakterisierbar ist, umfassen. Unter Anwendung einer (Rechen-)Vorschrift und/oder einer (ebenfalls in der Steuerung hinterlegten) Zuordnung, z.B. in Form einer Tabelle oder mehrdimensionalen Matrix, ermittelt die Routine Ausgangsgrößen, welche den Antriebsparametern der Antriebskomponenten entsprechen oder aus welchen sich letztere ableiten lassen.

Dadurch kann die Kombination aus erster und zweiter Antriebskomponente (bzw. allenfalls weiterer Antriebskomponenten) oder überhaupt der gesamte Antriebsstrang in jedem Anwendungsfall im Bereich ihres/seines optimalen Wirkungsgrads betrieben werden.

Die Routine legt somit - meist ausgehend von Eingangsparametern, wie Werkstückparametern und/oder Biegeparametern und/oder der Betriebsphase - mit der Vorgabe der Antriebsparameter den optimalen Betriebspunkt fest. Mit anderen Worten: die erforderlichen Reglerdaten für die Antriebskomponenten werden entsprechend angepasst, um diesen optimalen Betriebspunkt zu erreichen.

Jedes umzuformende Werkstück stellt andere Anforderungen an eine Umform- bzw. Biegemaschine, d.h. die erforderlichen Kräfte können variieren. Zusätzlich können die Geschwindigkeiten des bewegbaren Maschinenteils (frei) für verschiedene Betriebsphasen gewählt und/oder verschiedene Haltezeiten (frei) programmiert werden. Die Erfindung stellt für diese Vielzahl und Vielfalt an Anwendungsfällen die passenden Antriebsparameter bereit.

Zur Erzeugung der erforderlichen Presskraft bei Umformmaschinen bedarf es eines Antriebsstranges, welcher üblicherweise mehrere Antriebskomponenten umfasst. Eine besondere Ausführung einer Umformmaschine stellt eine hydraulische Biegemaschine dar, bei der die benötigte Umformkraft durch die Verwendung folgender Antriebskomponenten erzeugt wird: ein Motor, eine vom Motor angetrieben Hydraulikpumpe und ein mit der Hydraulikpumpe in Wirkverbindung stehender Zylinder.

Bei servohydraulisch angetriebenen Biegemaschinen sind dabei der Servomotor und der Servoregler von besonderem Interesse. Beispielsweise kann aus den Einzelwirkungsgraden der einzelnen Antriebskomponenten eine Wirkungsgradmatrix des Antriebsstranges erstellt werden. Wird der Antrieb nun statt an den üblichen Betriebspunkten in optimierten Bereichen betrieben kann der Energiebedarf deutlich gesenkt werden.

Auch bei einem lagegeregelten Stopp eines der Maschinenteile kann Energie gespart werden. Da ein solcher lagegeregelter Stopp einen geringeren Druck benötigt und der Motor zu diesem Zeitpunkt mit einer geringen Drehzahl läuft, ist der Wirkungsgrad gering. D.h. die Stoppzeit in der Lageregelung sollte so kurz als möglich sein. Somit ist in einer bevorzugten Ausführungsform ein Antriebsparameter der ersten und/oder zweiten Antriebskomponente jene Zeitspanne (Stoppzeit), die für einen legegeregelten Stopp eines der Maschinenteile zur Verfügung gestellt wird.

Eine bevorzugte Ausführungsform zeichnet sich dadurch aus, dass die Routine eingerichtet ist,
in Abhängigkeit von zumindest einem Werkstückparameter, insbesondere der Werkstückdicke und/oder des Werkstückmaterials und/oder der Werkstückform,
   und/oder
in Abhängigkeit von zumindest einem Biegeparameter, insbesondere des Biegewinkels und/oder der Eintauchtiefe und/oder der Umformkraft,
   und/oder
in Abhängigkeit einer Betriebsphase der Umformmaschine, insbesondere der Zustellphase (auch Eilphase genannt) und/oder der Umformphase,
den zumindest einen Antriebsparameter der ersten Antriebskomponente und den zumindest einen Antriebsparameter der zweiten Antriebskomponente auszuwählen und/oder zu ermitteln. Die Optimierungs-Routine ermittelt ausgehend von Eingangsgrößen, welche den jeweiligen Anwendungsfall definieren, die - hinsichtlich der Energieeffizienz und/oder Wirkungsgrades optimierten - Antriebsparameter. Auf diese Weise kann die Routine individuell auf den jeweiligen Anwendungsfall eingehen und dafür optimierte Parameter ausgeben. Mit anderen Worten: Die Routine ermittelt jene Antriebsparameter, die unter den vorgegebenen Rahmenbedingungen (Werkstückparameter, Biegeparameter und/oder Betriebsphase) die höchste Energieeffizienz bzw. den höchsten Wirkungsgrad ergeben.

Eine bevorzugte Ausführungsform zeichnet sich dadurch aus, dass in der Steuerung zumindest eine Parameterzuordnung, insbesondere in Form eines Datensatzes und/oder einer Rechenvorschrift und/oder einer Funktion, hinterlegt ist, die Werkstückparametern und/oder Biegeparametern und/oder Betriebsphasen der Umformmaschine jeweils zumindest einen Antriebsparameter der ersten Antriebskomponente und zumindest einen Antriebsparameter der zweiten Antriebskomponente zuordnet. Diese Parameterzuordnung kann von der Routine selbst umfasst sein und z.B. in Form einer Tabelle, Matrix und/oder eines Algorithmus hinterlegt sein. Bevorzugt ist die Parameterzuordnung eine mehrdimensionale Matrix, in der z.B. jeder Kombination von Eingangsgrößen (Werkstückparameter, Biegeparameter und/oder Betriebsphase) eine Kombination von (optimierten) Antriebsparametern zugeordnet ist. Die Parameterzuordnung kann im Vorfeld ermittelt bzw. programmiert werden und alle maßgeblichen Einflussgrößen auf den Wirkungsgrad des Antriebsstranges oder der Kombination einzelner Antriebskomponenten berücksichtigen.

Die erfindungsgemäße Vorrichtung zeichnet sich dadurch aus, dass die Routine eine Zuordnung, vorzugsweise in Form einer Wirkungsgradmatrix, umfasst, die Kombinationen von zumindest einem Antriebsparameter der ersten Antriebskomponente und zumindest einem Antriebsparameter der zweiten Antriebskomponente jeweils einen Wirkungsgrad der Kombination zumindest der ersten Antriebskomponente und der zweiten Antriebskomponenten zuordnet. Auf diese Weise kann die die Routine nach dem höchsten Wirkungsgrad suchen und ausgehend davon die optimale Kombination von Antriebsparametern auswählen. Selbstverständlich können hier auch weitere Antriebskomponenten und deren Antriebsparameter berücksichtigt sein, sodass hier nicht nur eine 2-dimensionale, sondern auch mehrdimensionale Matrizen vorgesehen sein könnten.

Eine bevorzugte Ausführungsform zeichnet sich dadurch aus, dass die Routine eingerichtet ist, bei vorgegebenen Werkstückparametern und/oder vorgegebenen Biegeparametern und/oder vorgegebener Betriebsphase jene(n) Antriebsparameter der ersten Antriebskomponente und Antriebsparameter der zweiten Antriebskomponente auszuwählen, bei denen der Wirkungsgrad der Kombination zumindest der ersten Antriebskomponente und der zweiten Antriebskomponenten und/oder der Wirkungsgrad des gesamten Antriebsstranges größer als 0,8 ist und/oder ein Maximum aufweist. Aufgrund dieses Kriteriums ist sichergestellt, dass die Umformmaschine immer auf den optimalen Betriebspunkt ausgerichtet ist, wodurch der Energieverbrauch minimiert wird.

Eine bevorzugte Ausführungsform zeichnet sich dadurch aus, dass die Umformmaschine zumindest einen Sensor zur Erfassung einer Antriebsgröße, insbesondere eines Drehmoments, eines Druckes, einer Umformkraft und/oder einer Position des ersten Maschinenteils relativ zum zweiten Maschinenteil,
und/oder
zumindest einen Sensor zur Erfassung einer Werkstückeigenschaft (z.B. Geometrie, Position, Verformungsgrad, usw.), insbesondere vor und/oder während des Umformvorganges, umfasst,
wobei der zumindest eine Sensor mit der Steuerung kommunikationsverbunden ist und die Sensordaten des zumindest einen Sensors und/oder (eine) aus den Sensordaten abgeleitete Größe(n) (eine) Eingangsgröße(n) der Routine sind. Durch den/die Sensor(en) erhält die Optimierungs-Routine zusätzliche Informationen über den Betriebsablauf bzw. die Umformung, wodurch die Antriebsparameter noch besser an die jeweilige Situation angepasst werden können. Sensorwerte können ebenfalls Teil der zuvor genannten (Parameter-)Zuordnungen sein.

Eine bevorzugte Ausführungsform zeichnet sich dadurch aus, dass die Umformmaschine zumindest eine Eingabeschnittstelle zum Eingeben von Werkstückparametern und/oder Biegeparametern aufweist, wobei die Werkstückparameter und/oder Biegeparameter Eingangsgrößen der Routine sind. Durch die Eingabeschnittstelle können entweder automatisch oder durch einen Bediener (im letzteren Fall handelt es sich um eine Benutzerschnittstelle) die den Anwendungsfall definierenden Parameter (d.h. die vorgegebenen Rahmenbedingungen für den Umformprozess) der Optimierungs-Routine zugeführt werden.

Eine bevorzugte Ausführungsform zeichnet sich dadurch aus, dass die Routine eingerichtet ist, im Zuge der Änderung zumindest eines Antriebsparameters der ersten Antriebskomponente auch zumindest einen Antriebsparameter der zweiten Antriebskomponente zu ändern. Dadurch erfolgt eine dynamische bzw. flexible Anpassung, welcher der erfindungsgemäße Gedanke zugrunde liegt, dass bei einer Energieeffizienzoptimierung die (optimalen) Antriebsparameter voneinander abhängig sind bzw. voneinander abhängig eingestellt werden müssen.

Die erfindungsgemäße Vorrichtung zeichnet sich dadurch aus, dass die Routine eingerichtet ist, zumindest einen Antriebsparameter zumindest einer Antriebskomponente anzupassen, wenn der Wirkungsgrad der Kombination zumindest der ersten und zweiten Antriebskomponente kleiner als ein vorgegebener Wert ist und/oder während des Betriebs der Umformmaschine unter einen vorgegebenen Wert fällt. Auf diese Weise kann unmittelbar auf eine eintretende Situation reagiert werden.

Eine bevorzugte Ausführungsform zeichnet sich dadurch aus, dass in der Steuerung zumindest zwei Betriebsphasen, insbesondere eine Umformphase und eine Zustellphase (manchmal auch Eilphase genannt) abgebildet sind, die sich durch die Umformkraft und/oder Zustellgeschwindigkeit zwischen erstem und zweiten Maschinenteil unterscheiden, wobei die Routine eingerichtet ist, die - in Abhängigkeit der jeweiligen Betriebsphase - unterschiedliche Antriebsparameter der ersten Antriebskomponente des Antriebsstranges und unterschiedliche Antriebsparameter einer zweiten Antriebskomponente des Antriebsstranges vorzugeben. Eine bevorzugte Ausführungsform zeichnet sich dadurch aus, dass der Antriebsstrang eine Zylinder-Kolben-Einheit umfasst, die durch die erste Antriebskomponente und/oder zweite Antriebskomponente mit Druck beaufschlagbar ist.

Eine bevorzugte Ausführungsform zeichnet sich dadurch aus, dass die erste Antriebskomponente und die zweite Antriebskomponente im Antriebsstrang seriell nacheinander geschaltet sind

Bevorzugt ist, wenn die die erste Antriebskomponente (z.B. Motor) die zweite Antriebskomponente (z.B. Pumpe) antreibt. Besonders bevorzugt ist, wenn in weiterer Folge die zweite Antriebskomponente die Zylinder-Kolben-Einheit antreibt.

Eine bevorzugte Ausführungsform zeichnet sich dadurch aus, dass die erste Antriebskomponente einen Motor, vorzugsweise einen Servomotor, umfasst, wobei vorzugsweise ein durch die Steuerung gemäß der Routine verstellbarer Antriebsparameter der ersten Antriebskomponente die Drehzahl und/oder das Drehmoment des Motors ist.

Eine bevorzugte Ausführungsform ist dadurch gekennzeichnet,
dass die zweite Antriebskomponente eine von dem Motor angetriebene Pumpe, insbesondere Regelpumpe, umfasst, wobei vorzugsweise ein durch die Steuerung gemäß der Routine verstellbarer Antriebsparameter der zweiten Antriebskomponente der Fördervolumenstrom ist, und/oder
dass die zweite Antriebskomponente ein mechanisches Getriebe umfasst, wobei vorzugsweise ein durch die Steuerung gemäß der Routine verstellbarer Antriebsparameter der zweiten Antriebskomponente die Übersetzung des Getriebes ist.

Der Fördervolumenstrom ist u.a. vom geometrischen Verdrängungsvolumen der Pumpe abhängig. Es können daher u.a. Regelpumpen mit veränderlichem geometrischen Verdrängungsvolumen eingesetzt werden. In diesem Fall kann der Antriebsparameter der zweiten Antriebskomponente das geometrische Verdrängungsvolumen der Pumpe sein.

Eine bevorzugte Ausführungsform zeichnet sich dadurch aus, dass die Routine eingerichtet ist, in zumindest einem Betriebsmodus der Umformmaschine
im Zuge der Erhöhung der Drehzahl des von der ersten Antriebseinheit umfassten Motors, den Fördervolumenstrom der von der zweiten Antriebskomponente umfassten Pumpe zu verringern
   und/oder
im Zuge der Verringerung der Drehzahl des von der ersten Antriebseinheit umfassten Motors, den Fördervolumenstrom der von der zweiten Antriebskomponente umfassten Pumpe zu erhöhen.

Eine bevorzugte Ausführungsform zeichnet sich dadurch aus, dass zumindest ein Antriebsparameter einer dritten Antriebskomponente des Antriebsstranges durch die Steuerung verstellbar ist, wobei der zumindest eine Antriebsparameter der dritten Antriebskomponente in zumindest einem Betriebsmodus der Umformmaschine durch die Routine vorgegeben ist. Eine bevorzugte Ausführungsform zeichnet sich dadurch aus, dass die dritte Antriebskomponente ein Ventil umfasst, wobei vorzugsweise ein durch die Steuerung verstellbarer Antriebsparameter der dritten Antriebskomponente die Ventilstellung ist.

Eine bevorzugte Ausführungsform zeichnet sich dadurch aus, dass der erste Maschinenteil und/oder der zweite Maschinenteil eine Umformwerkzeughalterung und/oder zumindest ein Umformwerkzeug umfasst/-en. Z.B. kann der erste (insbesondere bewegbare) Maschinenteil die Oberwerkzeughalterung und gegebenenfalls zumindest ein darin eingesetztes Oberwerkzeug (z.B. in Form eines Stempels) umfassen und kann der zweite (insbesondere stationäre) Maschinenteil die Unterwerkzeughalterung und gegebenenfalls zumindest ein darin eingesetztes Unterwerkzeug (z.B. in Form einer Matrize bzw. eines Gesenks) umfassen Die Aufgabe wird auch gelöst durch ein Verfahren zum Betreiben einer Umformmaschine zum Umformen von Werkstücken, gemäß dem unabhängigen Anspruch 17.

Das erfindungsgemäße Verfahren zeichnet sich dadurch aus, dass die Umformmaschine nach einer der vorhergehend beschriebenen Ausführungsformen ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Ausführungsform einer erfindungsgemäßen Umformmaschine;
- Fig. 2: das Prinzip der Optimierung gemäß einer Ausführungsform der Erfindung;
- Fig. 3: den Wirkungsgrad eines Antriebsstranges in Abhängigkeit der Drehzahl eines Pumpenmotors bei verschiedenen Drehmomenten (in % des Bemessungsdrehmomentes) sowie im Eilgang und
- Fig. 4: in schematischer Darstellung eine Wirkungsgradmatrix betreffend den Antriebsstrang, wobei die einzelnen Kästchen jeweils einen Wirkungsgrad für eine Kombination aus Drehmoment (in % des Bemessungsdrehmomentes) und Drehzahl enthalten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

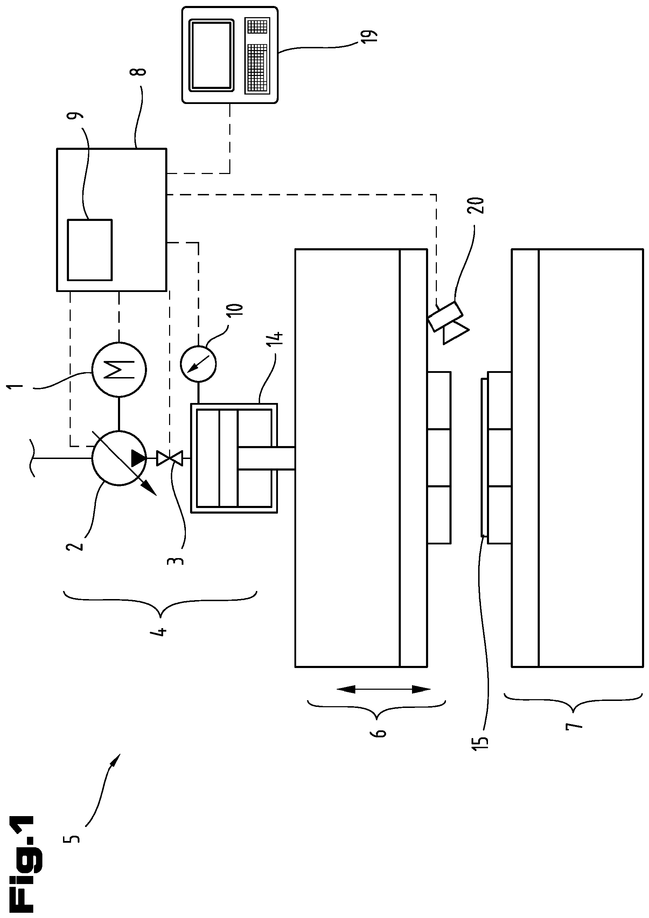

Fig. 1 zeigt eine Umformmaschine 5 zum Umformen von Werkstücken 15 in Form einer Biegemaschine zum Biegen von - insbesondere blechförmigen - Werkstücken. Die Umformmaschine ist vorzugsweise eine Metallumformmaschine zum Umformen von metallischen Werkstücken. Dabei kann es sich z.B. um Biegepressen, Schwenkbiegemaschinen oder Abkantpressen handeln. Auch Umformmaschinen, die in einem Umformvorhang dem Werkstück eine dreidimensionale und/oder komplexe Form aufprägen sind von der Erfindung umfasst.

Umformmaschine 5 umfasst einen ersten Maschinenteil 6 und einen zweiten Maschinenteil 7 und ein Antriebssystem zum Bewegen des ersten Maschinenteils 6 relativ zum zweiten Maschinenteil 7. Das Antriebssystem bewirkt die Relativbewegung und erzeugt die Umformkraft. Es weist einen aus zumindest zwei Antriebskomponenten 1, 2, 3 gebildeten Antriebsstrang 4 auf.

Durch eine Steuerung 8 ist zumindest ein Antriebsparameter 11 einer ersten Antriebskomponente 1 des Antriebsstranges 4 und zumindest ein Antriebsparameter 12 einer zweiten Antriebskomponente 2 des Antriebsstranges 4 verstellbar. Mit anderen Worten: Die Steuerung steuert die Antriebskomponenten an, indem sie Antriebsparameter der Antriebskomponenten einstellt.

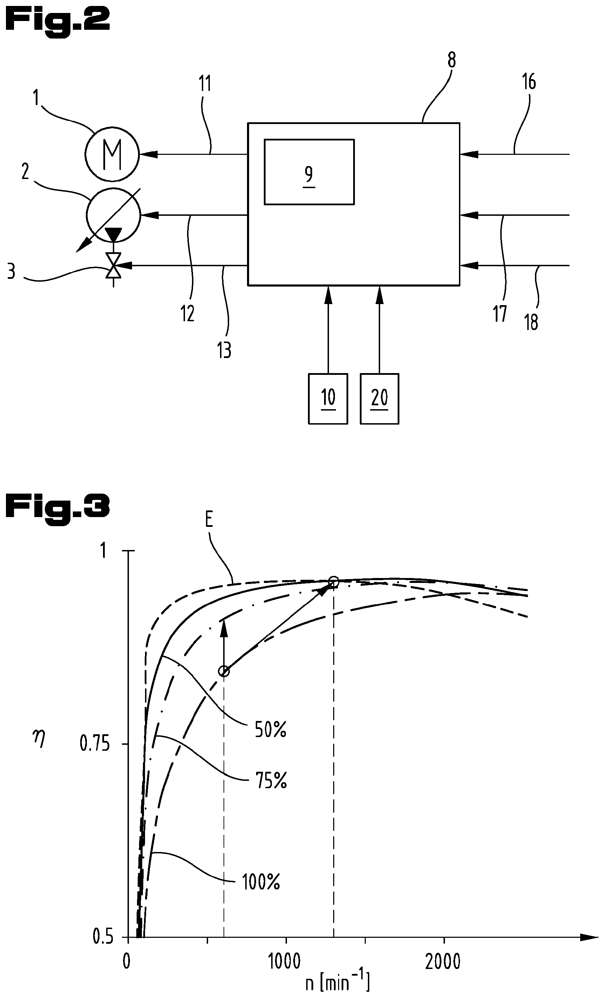

In der dargestellten Ausführungsform umfasst die erste Antriebskomponente 1 einen Motor, vorzugsweise einen Servomotor. Ein durch die Steuerung 8 gemäß der Routine 9 verstellbarer Antriebsparameter 11 der ersten Antriebskomponente 1 kann z.B. die Drehzahl und/oder das Drehmoment des Motors sein. Die zweite Antriebskomponente 2 umfasst gemäß der Ausführungsform von Fig. 2 eine von dem Motor angetriebene Pumpe, insbesondere Regelpumpe. Ein durch die Steuerung 8 gemäß der Routine 9 verstellbarer Antriebsparameter 12 der zweiten Antriebskomponente 2 kann z.B. der Fördervolumenstrom sein.

Alternativ könnte z.B. die zweite Antriebskomponente 2 ein mechanisches Getriebe umfassen, wobei vorzugsweise ein durch die Steuerung 8 gemäß der Routine 9 verstellbarer Antriebsparameter 12 der zweiten Antriebskomponente 2 die Übersetzung des Getriebes ist.

Die erste Antriebskomponente 1 und die zweite Antriebskomponente 2 sind im Antriebsstrang 4 seriell geschaltet, indem die erste Antriebskomponente 1 (hier der Motor) die zweite Antriebskomponente 2 (hier die Pumpe) antreibt. In weiterer Folge treibt die zweite Antriebskomponente 2 die Zylinder-Kolben-Einheit 14 an, welche auf den ersten Maschinenteil 1 wirkt. Hier umfasst also der Antriebsstrang 4 eine Zylinder-Kolben-Einheit 14, die durch die erste Antriebskomponente 1 und/oder zweite Antriebskomponente 2 mit Druck beaufschlagbar ist.

In der dargestellten Ausführungsform ist zumindest ein Antriebsparameter 13 einer dritten Antriebskomponente 3 des Antriebsstranges 4 durch die Steuerung 8 verstellbar ist, wobei der zumindest eine Antriebsparameter 13 der dritten Antriebskomponente 3 in zumindest einem Betriebsmodus der Umformmaschine 5 durch die Routine 9 vorgegeben ist. Die dritte Antriebskomponente 3 kann z.B. ein Ventil umfassen, wobei vorzugsweise ein durch die Steuerung 8 gemäß der Routine 9 verstellbarer Antriebsparameter 13 der dritten Antriebskomponente 3 die Ventilstellung ist.

An dieser Stelle sei erwähnt, dass die Kombination aus Motor und Pumpe lediglich bevorzugte Ausführungsformen darstellen, und dass aber andere Kombinationen aus - einen Antriebsstrang bildenden - Antriebskomponenten ebenfalls möglich sind. Solche ansteuerbare Antriebskomponenten können insbesondere mechanischer, hydraulischer, pneumatischer, elektromagnetischer Natur sein. Auch wenn die vorliegende Erfindung anhand der Kombination von Motor und Pumpe beschrieben wird, lässt sich das erfindungsgemäße Prinzip gleichermaßen auf andere Kombinationen von Antriebskomponenten übertragen.

In der besagten Steuerung 8 ist nun eine Routine 9 zur Optimierung der Energieeffizienz und/oder des Wirkungsgrades des Antriebssystems hinterlegt. Der zumindest eine Antriebsparameter 11 der ersten Antriebskomponente 1 und der zumindest eine Antriebsparameter 12 der zweiten Antriebskomponente 2 werden - in zumindest einem Betriebsmodus der Umformmaschine 5 - durch diese Optimierungs-Routine 9 vorgegeben.

Die Routine 9 kann - wie in Fig. 2 schematisch dargestellt - insbesondere dazu eingerichtet bzw. programmiert sein,
in Abhängigkeit von zumindest einem Werkstückparameter 16, insbesondere der Werkstückdicke und/oder des Werkstückmaterials und/oder der Werkstückform,
   und/oder
in Abhängigkeit von zumindest einem Biegeparameter 17, insbesondere des Biegewinkels und/oder der Eintauchtiefe und/oder der Umformkraft,
   und/oder
in Abhängigkeit einer Betriebsphase 18 der Umformmaschine 5, insbesondere der Zustellphase und/oder der Umformphase,
den zumindest einen Antriebsparameter 11 der ersten Antriebskomponente 1 und den zumindest einen Antriebsparameter 12 der zweiten Antriebskomponente 2 auszuwählen und/oder zu ermitteln.

Dabei kann in der Steuerung 8 zumindest eine Parameterzuordnung, insbesondere in Form eines Datensatzes und/oder einer Rechenvorschrift und/oder einer Funktion, hinterlegt sein, die Werkstückparametern 16 und/oder Biegeparametern 17 und/oder Betriebsphasen 18 der Umformmaschine 5 jeweils zumindest einen Antriebsparameter 11 der ersten Antriebskomponente 1 und zumindest einen Antriebsparameter 12 der zweiten Antriebskomponente 2 zuordnet. Im Falle eines Datensatzes, z.B. in Form einer (mehrdimensionalen) Tabelle oder Matrix, können jeder Kombination dieser Eingangsgrößen (Werkstückparametern 16 und/oder Biegeparametern 17 und/oder Betriebsphasen 18) Werte für die jeweiligen Antriebsparameter 11, 12, 13 zugeordnet sein. Im Falle einer Funktion bzw. Rechenvorschrift kann eine solche Zuordnung zumindest teilweise auch analytische Zusammenhänge beinhalten. In jedem Fall lässt sich eine solche Parameterzuordnung folgendermaßen schematisch darstellen: (y₁₁, y₁₂, y₁₃) = F (x₁₆, x₁₇, x₁₈), wobei y₁₁, y₁₂, y₁₃ die Werte der Antriebsparameter 11, 12, 13 und x₁₆, x₁₇, x₁₈ die Werte der Eingangsgrößen 16, 17, 18 darstellen.

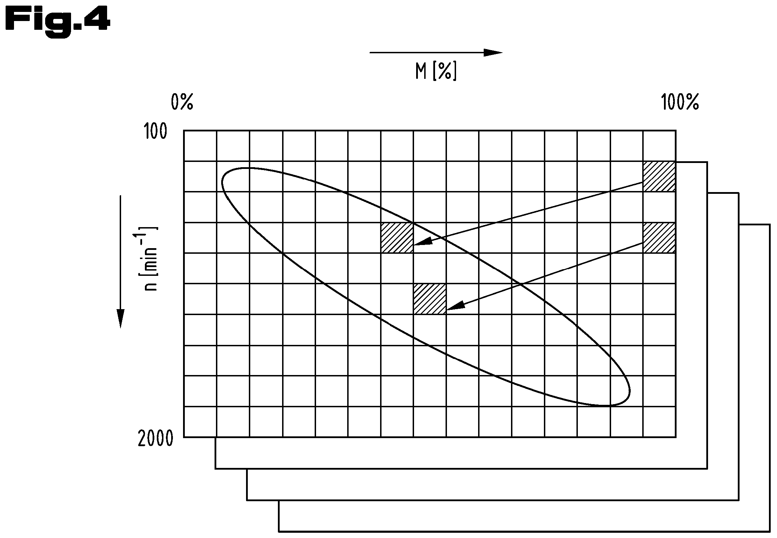

Alternativ oder zusätzlich kann die Routine 9 eine Zuordnung, vorzugsweise in Form einer Wirkungsgradmatrix, umfassen, die Kombinationen von zumindest einem Antriebsparameter 11 der ersten Antriebskomponente 1 und zumindest einem Antriebsparameter 12 der zweiten Antriebskomponente 2 jeweils einen Wirkungsgrad der Kombination zumindest der ersten Antriebskomponente 1 und der zweiten Antriebskomponente 2 zuordnet. Eine solche Wirkungsgradmatrix (für eine Kombination aus Motor und Pumpe) ist in Fig. 4 schematisch dargestellt. Diese Wirkungsgradmatrix betrifft einen Antriebsstrang, wobei die einzelnen Kästchen jeweils einen Wirkungsgrad für eine Kombination aus Drehmoment (in % des Bemessungsdrehmomentes) und Drehzahl des Antriebsmotors enthalten sind. Der sich entlang der Diagonale - von links oben nach rechts unten - erstreckende ovale Bereich enthält Wirkungsgrad-Werte, die über jenen außerhalb des abgegrenzten ovalen Bereiches liegen. Z.B. kann der abgegrenzte Bereich so gelegt sein, dass er nur Wirkungsgrade über 0,8 enthält. Die schraffierten Kästchen mit den dazugehörigen Pfeilen deuten nun an, dass durch eine Veränderung (hier: Reduktion) des Drehmomentes und eine Veränderung (hier Erhöhung) der Drehzahl der Wirkungsgrad des Antriebsstranges erhöht werden kann. Während das Drehmoment mit dem Fördervolumenstrom der Pumpe korreliert (und somit durch den Antriebsparameter 12 der zweiten Antriebskomponente 2 einstellbar ist), ist die Drehzahl (als Antriebsparameter 11 der ersten Antriebskomponente 1) direkt am Motor einstellbar. Die Routine 9 kann nun anhand der Wirkungsgradmatrix jene Werte für die Antriebsparameter 11, 12 auswählen, die den größten Wirkungsgraden entsprechen.

In Fig. 3 ist der Wirkungsgrad der Kombination aus Motor und Pumpe in Abhängigkeit der Drehzahl des Motors und für verschiedene Drehmomente (100%, 75% und 50% des Bemessungsdrehmomentes) und im Eilgang E dargestellt ist. Das Drehmoment ist ein Maß für den Pumpenförderstrom einer Regelpumpe und korreliert somit mit dem Antriebsparameter 12 der zweiten Antriebskomponente.

Der gerade nach oben gerichtete Pfeil zeigt, dass - bei gleichbleibender Drehzahl - durch eine Reduktion des Drehmomentes (was durch eine Änderung des Fördervolumenstroms erfolgt), der Wirkungsgrad erhöht werden kann. Eine gleichzeitige Erhöhung der Drehzahl und Reduktion des Drehmomentes (was durch eine Änderung des Fördervolumenstroms erfolgt) führt in der Umformphase ebenfalls zu einer deutlichen Erhöhung des Wirkungsgrades (siehe den schräg nach oben rechts gerichteten Pfeil). In der Routine bzw. den Datensätzen, auf welche die Routine zurückgreift, sind diese Zusammenhänge (die natürlich von der jeweiligen Kombination der Antriebskomponenten abhängig sind) direkt oder indirekt abgebildet.

Die Routine kann somit dazu eingerichtet sein, in zumindest einem Betriebsmodus der Umformmaschine 5
im Zuge der Erhöhung der Drehzahl des von der ersten Antriebseinheit 1 umfassten Motors, den Fördervolumenstrom der von der zweiten Antriebskomponente (2) umfassten Pumpe zu verringern
   und/oder
im Zuge der Verringerung der Drehzahl des von der ersten Antriebseinheit 1 umfassten Motors, den Fördervolumenstrom der von der zweiten Antriebskomponente 2 umfassten Pumpe zu erhöhen.

Dabei kann die Routine 9 insbesondere dazu eingerichtet sein, bei vorgegebenen Werkstückparametern 16 und/oder vorgegebenen Biegeparametern 17 und/oder vorgegebener Betriebsphase 18 jene(n) Antriebsparameter 11 der ersten Antriebskomponente 1 und Antriebsparameter 12 der zweiten Antriebskomponente 2 auszuwählen, bei denen der Wirkungsgrad der Kombination zumindest der ersten Antriebskomponente 1 und der zweiten Antriebskomponente 2 und/oder der Wirkungsgrad des gesamten Antriebsstranges 4 größer als 0,8 ist und/oder ein Maximum aufweist.

In den Fig. 1 und 2 ist zudem angedeutet, dass die Umformmaschine 5
zumindest einen Sensor 10 zur Erfassung einer Antriebsgröße, insbesondere eines Drehmoments, eines Druckes, einer Umformkraft und/oder einer Position des ersten Maschinenteils 6 relativ zum zweiten Maschinenteil 7,
   und/oder
zumindest einen Sensor 20 zur Erfassung einer Werkstückeigenschaft, insbesondere vor und/oder während des Umformvorganges,
umfassen kann, wobei der zumindest eine Sensor 10, 20 mit der Steuerung 8 kommunikationsverbunden ist und die Sensordaten des zumindest einen Sensors 10, 20 und/oder (eine) aus den Sensordaten abgeleitete Größe(n) (eine) Eingangsgröße(n) der Routine 9 sind.

Die Umformmaschine 5 kann - wie in Fig. 1 gezeigt - zumindest eine Eingabeschnittstelle 19 zum Eingeben von Werkstückparametern 16 und/oder Biegeparametern 17 aufweisen, wobei die Werkstückparameter 16 und/oder Biegeparameter 17 Eingangsgrößen der Routine 9 sind.

Die Routine 9 kann insbesondere eingerichtet sein, im Zuge der Änderung zumindest eines Antriebsparameters 11 der ersten Antriebskomponente 1 auch zumindest einen Antriebsparameter 12 der zweiten Antriebskomponente 2 zu ändern.

Die Routine 9 ist vorzugsweise dazu eingerichtet bzw. programmiert, zumindest einen Antriebsparameter 11, 12, 13 zumindest einer Antriebskomponente 1, 2, 3 anzupassen, wenn der Wirkungsgrad der Kombination zumindest der ersten und zweiten Antriebskomponente 1, 2 kleiner als ein vorgegebener Wert ist und/oder während des Betriebs der Umformmaschine 5 unter einen vorgegebenen Wert fällt.

In der Steuerung 8 können zumindest zwei Betriebsphasen, insbesondere eine Umformphase (d.h. den eigentlichen Umformvorgang) und eine Zustellphase (in der zumindest einer der Maschinenteile 1, 2 nicht auf das Werkstück einwirkt; auch Eilphase genannt) abgebildet sein, die sich durch die Umformkraft und/oder die Zustellgeschwindigkeit zwischen erstem und zweiten Maschinenteil 6, 7 unterscheiden, wobei die Routine 9 eingerichtet ist, die in Abhängigkeit der jeweiligen Betriebsphase unterschiedliche Antriebsparameter 11 der ersten Antriebskomponente 1 des Antriebsstranges 4 und unterschiedliche Antriebsparameter 12 einer zweiten Antriebskomponente 2 des Antriebsstranges 4 vorzugeben.

Der erste Maschinenteil 6 und/oder der zweite Maschinenteil 7 können jeweils eine Umformwerkzeughalterung und/oder zumindest ein (bevorzugt von der Umformwerkzeughalterung gehaltenes) Umformwerkzeug umfassen.

Schließlich können die oben beschriebenen Aspekte auch im Rahmen eines Verfahrens zum Betreiben einer Umformmaschine 5 verwirklicht sein.

Abschließend wird das Potential der Erfindung noch am Beispiel eines (Servo-)Motors beschrieben:
Die Abwärtsfahrt des ersten Maschinenteils 1 (z.B. Pressbalkens) wird durch dessen Masse angetrieben. Die Regelung erfolgt durch generatorische Bremsung durch den (Servo-)Motor. Dadurch können geringe Energiemengen in den Zwischenkreis zurückgespeist werden.

Bei der Aufwärtsfahrt des ersten Maschinenteils 1 im Bereich der maximalen Geschwindigkeit werden höhere Drücke (z.B. im Bereich von ca. 120bar) benötigt (ca. 1/3 der Maximalkraft). Die Geschwindigkeit kann durch die Bedienperson gewählt werden. In einem Beispiel läuft der Motor bei maximal 220mm/s und einem Drittel der Maximalkraft immer mit einem optimalen Wirkungsgrad (>95%)
Der lagegeregelte Stopp der Achse benötigt einen geringeren Druck (z.B. im Bereich von ca. 70bar, was z.B. 1/4 der Maximalkraft entsprechen kann). Da der Motor zu diesem Zeitpunkt mit einer geringen Drehzahl (z.B. einer Drehzahl von <100min⁻¹) läuft, ist der Wirkungsgrad gering (<60%). D.h. die Stoppzeit in der Lageregelung sollte so kurz als möglich sein.

In der Umformphase ist die erforderliche Kraft abhängig vom Werkstück und den gewählten Werkzeugen und kann von 5%-100% der Maximalkraft ausmachen. Die Geschwindigkeit kann vom Bediener gewählt werden und kann z.B. zwischen 1 und 10mm/s bzw. zwischen 1 und 25mm/s liegen. Kurzeitig kann die Regelung die Motordrehzahl aber zusätzlich auf höhere Drehzahlen (z.B. auf maximale 2200min⁻¹) anheben. Aus diesem Grund arbeitet der Motor nicht immer im Bereich des optimalen Wirkungsgrades. Speziell bei sehr langsamer Fahrt oder bei sehr hohen Kräften fällt der Wirkungsgrad deutlich ab.

Für diesen Bereich gibt es große Möglichkeiten, Energie einzusparen, wenn man eine Möglichkeit findet die Pumpe immer in einem Bereich zu betreiben, in dem der Wirkungsgrad optimal ist. Dafür könnten z.B. Hydraulikspeicher verwendet werden. Die Anpassung der Pressgeschwindigkeit könnte ein erster Schritt sein.

Auch am Beispiel der Hydraulikpumpe zeigt sich, dass es ebenfalls Bereiche gibt in denen die Pumpe sehr effizient arbeiten kann, während andere Bereiche unbedingt gemieden werden müssen.

Schließlich ist insbesondere die Kombination der ersten Antriebskomponente und der zweiten Antriebskomponente interessant, die bereits in der Wirkungsgradmatrix der Fig. 4 schematisch dargestellt wurde.

Als besonders geeignet erscheint die Paarung einer Regelpumpe und eines Servomotors. Dann könnte bei unveränderter Geschwindigkeit der Arbeitspunkt mehr oder weniger frei gewählt werden.

An dieser Stelle sei nochmals auf Fig. 3 verwiesen, in der der Wirkungsgrad in Abhängigkeit der Drehzahl des Motors und für verschiedene Drehmomente (100%, 75% und 50% des Bemessungsdrehmomentes) und im Eilgang E dargestellt ist. Der gerade nach oben gerichtete Pfeil zeigt, dass - bei gleichbleibender Drehzahl - durch eine Reduktion des Drehmomentes (was durch eine Änderung der Pumpenfördermenge erfolgt), der Wirkungsgrad erhöht werden kann. Eine gleichzeitige Erhöhung der Drehzahl und Reduktion des Drehmomentes (was durch eine Änderung der Pumpenfördermenge erfolgt) führt in der Umformphase ebenfalls zu einer deutlichen Erhöhung des Wirkungsgrades (siehe den schräg nach oben rechts gerichteten Pfeil).

### Bezugszeichenaufstellung

- 1: erste Antriebskomponente
- 2: zweite Antriebskomponente
- 3: dritte Antriebskomponente
- 4: Antriebsstrang
- 5: Umformmaschine
- 6: erster Maschinenteil
- 7: zweiter Maschinenteil
- 8: Steuerung
- 9: Routine
- 10: Sensor
- 11: Antriebsparameter
- 12: Antriebsparameter
- 13: Antriebsparameter
- 14: Zylinder-Kolben-Einheit
- 15: Werkstück
- 16: Werkstückparameter
- 17: Biegeparameter
- 18: Betriebsphase
- 19: Eingabeschnittstelle
- 20: Sensor
- E: Eilphase

## Patentansprüche

1. Umformmaschine (5) zum Umformen von Werkstücken (15), insbesondere Biegemaschine zum Biegen von Werkstücken, insbesondere blechförmigen Werkstücken, umfassend
- einen ersten Maschinenteil (6),
- einen zweiten Maschinenteil (7),
- eine Steuerung (8) und
- ein Antriebssystem zum Bewegen des ersten Maschinenteils (6) relativ zum zweiten Maschinenteil (7) und zum Erzeugen der Umformkraft, wobei das Antriebssystem einen aus zumindest zwei Antriebskomponenten (1, 2, 3) gebildeten Antriebsstrang (4) aufweist,
wobei zumindest ein Antriebsparameter (11) einer ersten Antriebskomponente (1) des Antriebsstranges (4) und zumindest ein Antriebsparameter (12) einer zweiten Antriebskomponente (2) des Antriebsstranges (4) durch die Steuerung (8) verstellbar sind, wobei in der Steuerung (8) eine Routine (9) zur Optimierung der Energieeffizienz und/oder des Wirkungsgrades des Antriebssystems hinterlegt ist und der zumindest eine Antriebsparameter (11) der ersten Antriebskomponente (1) und der zumindest eine Antriebsparameter (12) der zweiten Antriebskomponente (2) in zumindest einem Betriebsmodus der Umformmaschine (5) durch die Routine (9) vorgegeben sind,
**dadurch gekennzeichnet,**
**dass** die Routine (9) eine Zuordnung, vorzugsweise in Form einer Wirkungsgradmatrix, umfasst, die Kombinationen von zumindest einem Antriebsparameter (11) der ersten Antriebskomponente (1) und zumindest einem Antriebsparameter (12) der zweiten Antriebskomponente (2) jeweils einen Wirkungsgrad der Kombination zumindest der ersten Antriebskomponente (1) und der zweiten Antriebskomponente (2) zuordnet,
und/oder
**dass** die Routine (9) eingerichtet ist, zumindest einen Antriebsparameter (11, 12, 13) zumindest einer Antriebskomponente (1, 2, 3) anzupassen, wenn der Wirkungsgrad der Kombination zumindest der ersten und zweiten Antriebskomponente (1, 2) kleiner als ein vorgegebener Wert ist und/oder während des Betriebs der Umformmaschine (5) unter einen vorgegebenen Wert fällt.

2. Umformmaschine nach Anspruch 1, **dadurch gekennzeichnet, dass** die Routine (9) eingerichtet ist,
in Abhängigkeit von zumindest einem Werkstückparameter (16), insbesondere der Werkstückdicke und/oder des Werkstückmaterials und/oder der Werkstückform,
und/oder
in Abhängigkeit von zumindest einem Biegeparameter (17), insbesondere des Biegewinkels und/oder der Eintauchtiefe und/oder der Umformkraft,
und/oder
in Abhängigkeit einer Betriebsphase (18) der Umformmaschine (5), insbesondere der Zustellphase und/oder der Umformphase,
den zumindest einen Antriebsparameter (11) der ersten Antriebskomponente (1) und den zumindest einen Antriebsparameter (12) der zweiten Antriebskomponente (2) auszuwählen und/oder zu ermitteln.

3. Umformmaschine nach Anspruch 1 oder 2, **dadurch gekennzeichnet, dass** die Routine (9) zumindest eine Parameterzuordnung, insbesondere in Form eines Datensatzes und/oder einer Rechenvorschrift und/oder einer Funktion, umfasst, die Werkstückparametern (16) und/oder Biegeparametern (17) und/oder Betriebsphasen (18) der Umformmaschine (5) jeweils zumindest einen Antriebsparameter (11) der ersten Antriebskomponente (1) und zumindest einen Antriebsparameter (12) der zweiten Antriebskomponente (2) zuordnet.

4. Umformmaschine nach einem der vorhergehenden Ansprüche, **dadurch gekennzeichnet, dass** die Routine (9) eingerichtet ist, bei vorgegebenen Werkstückparametern (16) und/oder vorgegebenen Biegeparametern (17) und/oder vorgegebener Betriebsphase (18) jene(n) Antriebsparameter (11) der ersten Antriebskomponente (1) und Antriebsparameter (12) der zweiten Antriebskomponente (2) auszuwählen, bei denen der Wirkungsgrad der Kombination zumindest der ersten Antriebskomponente (1) und der zweiten Antriebskomponente (2) und/oder der Wirkungsgrad des gesamten Antriebsstranges (4) größer als 0,8 ist und/oder ein Maximum aufweist.

5. Umformmaschine nach einem der vorhergehenden Ansprüche, **dadurch gekennzeichnet, dass** die Umformmaschine (5)
zumindest einen Sensor (10) zur Erfassung einer Antriebsgröße, insbesondere eines Drehmoments, eines Druckes, einer Umformkraft und/oder einer Position des ersten Maschinenteils (6) relativ zum zweiten Maschinenteil (7),
und/oder
zumindest einen Sensor (20) zur Erfassung einer Werkstückeigenschaft, insbesondere vor und/oder während des Umformvorganges,
umfasst, wobei der zumindest eine Sensor (10, 20) mit der Steuerung (8) kommunikationsverbunden ist und die Sensordaten des zumindest einen Sensors (10, 20) und/oder (eine) aus den Sensordaten abgeleitete Größe(n) (eine) Eingangsgröße(n) der Routine (9) sind.

6. Umformmaschine nach einem der vorhergehenden Ansprüche, **dadurch gekennzeichnet, dass** die Umformmaschine (5) zumindest eine Eingabeschnittstelle (19) zum Eingeben von Werkstückparametern (16) und/oder Biegeparametern (17) aufweist, wobei die Werkstückparameter (16) und/oder Biegeparameter (17) Eingangsgrößen der Routine (9) sind.

7. Umformmaschine nach einem der vorhergehenden Ansprüche, **dadurch gekennzeichnet, dass** die Routine (9) eingerichtet ist, im Zuge der Änderung zumindest eines Antriebsparameters (11) der ersten Antriebskomponente (1) auch zumindest einen Antriebsparameter (12) der zweiten Antriebskomponente (2) zu ändern.

8. Umformmaschine nach einem der vorhergehenden Ansprüche, **dadurch gekennzeichnet, dass** in der Steuerung (8) zumindest zwei Betriebsphasen, insbesondere eine Umformphase und eine Zustellphase abgebildet sind, die sich durch die Umformkraft und/oder die Zustellgeschwindigkeit zwischen erstem und zweiten Maschinenteil (6, 7) unterscheiden, wobei die Routine (9) eingerichtet ist, die in Abhängigkeit der jeweiligen Betriebsphase unterschiedliche Antriebsparameter (11) der ersten Antriebskomponente (1) des Antriebsstranges (4) und unterschiedliche Antriebsparameter (12) einer zweiten Antriebskomponente (2) des Antriebsstranges (4) vorzugeben.

9. Umformmaschine nach einem der vorhergehenden Ansprüche, **dadurch gekennzeichnet, dass** der Antriebsstrang (4) eine Zylinder-Kolben-Einheit (14) umfasst, die durch die erste Antriebskomponente (1) und/oder zweite Antriebskomponente (2) mit Druck beaufschlagbar ist.

10. Umformmaschine nach einem der vorhergehenden Ansprüche, **dadurch gekennzeichnet, dass** die erste Antriebskomponente (1) und die zweite Antriebskomponente (2) im Antriebsstrang (4) seriell nacheinander geschaltet sind.

11. Umformmaschine nach einem der vorhergehenden Ansprüche, **dadurch gekennzeichnet, dass** die erste Antriebskomponente (1) einen Motor, vorzugsweise einen Servomotor, umfasst, wobei vorzugsweise ein durch die Steuerung (8) gemäß der Routine (9) verstellbarer Antriebsparameter (11) der ersten Antriebskomponente (1) die Drehzahl und/oder das Drehmoment des Motors ist.

12. Umformmaschine nach Anspruch 11, **dadurch gekennzeichnet,**
**dass** die zweite Antriebskomponente (2) eine von dem Motor angetriebene Pumpe, insbesondere Regelpumpe, umfasst, wobei vorzugsweise ein durch die Steuerung (8) gemäß der Routine (9) verstellbarer Antriebsparameter (12) der zweiten Antriebskomponente (2) der Fördervolumenstrom ist,
und/oder
**dass** die zweite Antriebskomponente (2) ein mechanisches Getriebe umfasst, wobei vorzugsweise ein durch die Steuerung (8) gemäß der Routine (9) verstellbarer Antriebsparameter (12) der zweiten Antriebskomponente (2) die Übersetzung des Getriebes ist.

13. Umformmaschine, nach Anspruch 12, **dadurch gekennzeichnet, dass** die Routine eingerichtet ist, in zumindest einem Betriebsmodus der Umformmaschine (5)
im Zuge der Erhöhung der Drehzahl des von der ersten Antriebseinheit (1) umfassten Motors, den Fördervolumenstrom der von der zweiten Antriebskomponente (2) umfassten Pumpe zu verringern
und/oder
im Zuge der Verringerung der Drehzahl des von der ersten Antriebseinheit (1) umfassten Motors, den Fördervolumenstrom der von der zweiten Antriebskomponente (2) umfassten Pumpe zu erhöhen.

14. Umformmaschine nach einem der vorhergehenden Ansprüche, **dadurch gekennzeichnet, dass** zumindest ein Antriebsparameter (13) einer dritten Antriebskomponente (3) des Antriebsstranges (4) durch die Steuerung (8) verstellbar ist, wobei der zumindest eine Antriebsparameter (13) der dritten Antriebskomponente (3) in zumindest einem Betriebsmodus der Umformmaschine (5) durch die Routine (9) vorgegeben ist.

15. Umformmaschine nach Anspruch 14, **dadurch gekennzeichnet, dass** die dritte Antriebskomponente (3) ein Ventil umfasst, wobei vorzugsweise ein durch die Steuerung (8) gemäß der Routine (9) verstellbarer Antriebsparameter (13) der dritten Antriebskomponente (3) die Ventilstellung ist.

16. Umformmaschine nach einem der vorhergehenden Ansprüche, **dadurch gekennzeichnet, dass** der erste Maschinenteil (6) und/oder der zweite Maschinenteil (7) eine Umformwerkzeughalterung und/oder zumindest ein Umformwerkzeug umfasst/-en.

17. Verfahren zum Betreiben einer Umformmaschine (5) zum Umformen von Werkstücken (15), insbesondere Biegemaschine zum Biegen von Werkstücken, insbesondere blechförmigen Werkstücken, wobei die Umformmaschine (5)
- einen ersten Maschinenteil (6),
- einen zweiten Maschinenteil (7),
- eine Steuerung (8) und
- ein Antriebssystem zum Bewegen des ersten Maschinenteils (6) relativ zum zweiten Maschinenteil (7) und zum Erzeugen der Umformkraft, wobei das Antriebssystem einen aus zumindest zwei Antriebskomponenten (1, 2, 3) gebildeten Antriebsstrang (4) aufweist,
umfasst,
**dadurch gekennzeichnet, dass** die Umformmaschine (5) nach einem der vorhergehenden Ansprüche ausgebildet ist und dass zumindest ein Antriebsparameter (11) einer ersten Antriebskomponente (1) des Antriebsstranges (4) und zumindest ein Antriebsparameter (12) einer zweiten Antriebskomponente (2) des Antriebsstranges (4) durch die Steuerung (8) verstellt werden, wobei in der Steuerung (8) eine Routine (9) zur Optimierung der Energieeffizienz und/oder des Wirkungsgrades des Antriebssystems hinterlegt ist und der zumindest eine Antriebsparameter (11) der ersten Antriebskomponente (1) und der zumindest eine Antriebsparameter (12) der zweiten Antriebskomponente (2) in zumindest einem Betriebsmodus der Umformmaschine (5) durch die Routine (9) vorgegeben werden.

## Claims

1. A forming machine (5) for forming workpieces (15), in particular a bending machine for bending workpieces, in particular sheet metal shaped workpieces, comprising
- a first machine part (6),
- a second machine part (7),
- a controller (8) and
- a drive system for moving the first machine part (6) relative to the second machine part (7) and for generating the forming force, wherein the drive system comprises a drive train (4) formed from at least two drive components (1, 2, 3),
wherein at least one drive parameter (11) of a first drive component (1) of the drive train (4) and at least one drive parameter (12) of a second drive component (2) of the drive train (4) are adjustable by the controller (8), wherein a routine (9) for optimizing the energy efficiency and/or the degree of efficiency of the drive system is stored in the controller (8) and the at least one drive parameter (11) of the first drive component (1) and the at least one drive parameter (12) of the second drive component (2) are specified by the routine (9) in at least one operating mode of the forming machine (5),
**characterized in that**
the routine (9) comprises an assignment, preferably in the form of an efficiency degree matrix, which assigns to combinations of at least one drive parameter (11) of the first drive component (1) and at least one drive parameter (12) of the second drive component (2) in each case a degree of efficiency of the combination of at least the first drive component (1) and the second drive component (2),
and/or
the routine (9) is configured to adjust at least one drive parameter (11, 12, 13) of at least one drive component (1, 2, 3) if the degree of efficiency of the combination of at least the first and second drive components (1, 2) is less than a predetermined value and/or falls below a predetermined value during operation of the forming machine (5).

2. The forming machine according to claim 1, **characterized in that** the routine (9) is configured,
in dependence of at least one workpiece parameter (16), in particular the workpiece thickness and/or the workpiece material and/or the workpiece shape,
and/or
in dependence of at least one bending parameter (17), in particular the bending angle and/or the plunge depth and/or the forming force,
and/or
in dependence of an operating phase (18) of the forming machine (5), in particular the infeed phase and/or the forming phase,
to select and/or determine the at least one drive parameter (11) of the first drive component (1) and the at least one drive parameter (12) of the second drive component (2).

3. The forming machine according to claim 1 or 2, **characterized in that** the routine (9) comprises at least one parameter assignment, in particular in the form of a data set and/or a calculation rule and/or a function, which assigns at least one drive parameter (11) of the first drive component (1) and at least one drive parameter (12) of the second drive component (2) to workpiece parameters (16) and/or bending parameters (17) and/or operating phases (18) of the forming machine (5).

4. The forming machine according to one of the preceding claims, **characterized in that** the routine (9) is configured to select the drive parameter(s) (11) of the first drive component (1) and the drive parameter(s) (12) of the second drive component (2) for predetermined workpiece parameters (16) and/or predetermined bending parameters (17) and/or predetermined operating phase (18), at which the degree of efficiency of the combination of at least the first drive component (1) and the second drive component (2) and/or the degree of efficiency of the entire drive train (4) is greater than 0.8 and/or has a maximum.

5. The forming machine according to one of the preceding claims, **characterized in that** the forming machine (5) comprises
at least one sensor (10) for detecting a drive variable, in particular a torque, a pressure, a forming force, and/or a position of the first machine part (6) relative to the second machine part (7),
and/or
at least one sensor (20) for detecting a workpiece property, in particular before and/or during the forming process,
wherein the at least one sensor (10, 20) is communication-connected to the controller (8) and the sensor data from the at least one sensor (10, 20) and/or (a) variable(s) derived from the sensor data are input variable(s) of the routine (9).

6. The forming machine according to one of the preceding claims, **characterized in that** the forming machine (5) has at least one input interface (19) for entering workpiece parameters (16) and/or bending parameters (17), wherein the workpiece parameters (16) and/or bending parameters (17) are input variables of the routine (9).

7. The forming machine according to one of the preceding claims, **characterized in that** the routine (9) is configured to change at least one drive parameter (12) of the second drive component (2) in the course of the change of at least one drive parameter (11) of the first drive component (1).

8. The forming machine according to one of the preceding claims, **characterized in that** at least two operating phases, in particular a forming phase and a feed phase, are represented in the controller (8), which differ in terms of the forming force and/or the feed speed between the first and second machine parts (6, 7), wherein the routine (9) is configured to specify, depending on the respective operating phase, different drive parameters (11) of the first drive component (1) of the drive train (4) and different drive parameters (12) of a second drive component (2) of the drive train (4).

9. The forming machine according to one of the preceding claims, **characterized in that** the drive train (4) comprises a cylinder-piston unit (14) which can be pressurized by the first drive component (1) and/or the second drive component (2).

10. The forming machine according to one of the preceding claims, **characterized in that** the first drive component (1) and the second drive component (2) are connected in series one after the other in the drive train (4).

11. The forming machine according to one of the preceding claims, **characterized in that** the first drive component (1) comprises a motor, preferably a servomotor, wherein preferably a drive parameter (11) of the first drive component (1) that is adjustable by the controller (8) in accordance with the routine (9) is the rotational speed and/or the torque of the motor.

12. The forming machine according to claim 11, **characterized in that**
the second drive component (2) comprises a pump driven by the motor, in particular a control pump, wherein preferably a drive parameter (12) of the second drive component (2) that is adjustable by the controller (8) in accordance with routine (9) is the delivery flow rate,
and/or
the second drive component (2) comprises a mechanical gearbox, wherein preferably a drive parameter (12) of the second drive component (2) that is adjustable by the controller (8) in accordance with the routine (9) is the gear ratio of the gearbox.

13. The forming machine according to claim 12, **characterized in that** the routine is configured, in at least one operating mode of the forming machine (5),
to reduce the delivery flow rate of the pump comprised by the second drive component (2) in the course of the increase of the rotational speed of the motor comprised by the first drive unit (1),
and/or
to increase the delivery flow rate of the pump comprised by the second drive component (2) in the course of the reduction in the rotational speed of the motor comprised by the first drive unit (1).

14. The forming machine according to one of the preceding claims, **characterized in that** at least one drive parameter (13) of a third drive component (3) of the drive train (4) is adjustable by the controller (8), wherein the at least one drive parameter (13) of the third drive component (3) is predetermined by the routine (9) in at least one operating mode of the forming machine (5).

15. The forming machine according to claim 14, **characterized in that** the third drive component (3) comprises a valve, wherein preferably a drive parameter (13) of the third drive component (3) that is adjustable by the controller (8) in accordance with the routine (9) is the valve position.

16. The forming machine according to one of the preceding claims, **characterized in that** the first machine part (6) and/or the second machine part (7) comprises/comprise a forming tool holder and/or at least one forming tool.

17. A method for operating a forming machine (5) for forming workpieces (15), in particular a bending machine for bending workpieces, in particular sheet metal shaped workpieces, wherein the forming machine (5) comprises
- a first machine part (6),
- a second machine part (7),
- a controller (8) and
- a drive system for moving the first machine part (6) relative to the second machine part (7) and for generating the forming force, wherein the drive system comprises a drive train (4) formed from at least two drive components (1, 2, 3),
**characterized in that** the forming machine (5) is formed according to one of the preceding claims and that at least one drive parameter (11) of a first drive component (1) of the drive train (4) and at least one drive parameter (12) of a second drive component (2) of the drive train (4) are adjusted by the controller (8), wherein a routine (9) for optimizing the energy efficiency and/or the degree of efficiency of the drive system is stored in the controller (8) and the at least one drive parameter (11) of the first drive component (1) and the at least one drive parameter (12) of the second drive component (2) are specified by the routine (9) in at least one operating mode of the forming machine (5).

## Revendications

1. Machine de formage (5) pour le formage de pièces à usiner (15), en particulier une machine à cintrer pour le cintrage de pièces à usiner, en particulier de pièces à usiner sous forme de tôle, comprenant
- une première partie de machine (6),
- une seconde partie de machine (7),
- une commande (8) et
- un système d'entraînement pour déplacer la première partie de machine (6) par rapport à la seconde partie de machine (7) et pour générer la force de formage, dans lequel le système d'entraînement comprend une chaîne cinématique (4) constituée d'au moins deux composants d'entraînement (1, 2, 3),
dans laquelle au moins un paramètre d'entraînement (11) d'un premier composant d'entraînement (1) de la chaîne cinématique (4) et au moins un paramètre d'entraînement (12) d'un deuxième composant d'entraînement (2) de la chaîne cinématique (4) peuvent être réglés par la commande (8), dans laquelle une routine (9) pour optimiser l'efficacité énergétique et/ou le rendement du système d'entraînement est enregistrée dans la commande (8) et le au moins un paramètre d'entraînement (11) du premier composant d'entraînement (1) et le au moins un paramètre d'entraînement (12) du deuxième composant d'entraînement (2) sont prédéfinis par la routine (9) dans au moins un mode de fonctionnement de la machine de formage (5),
**caractérisée en ce que**
la routine (9) comprend une affectation, de préférence sous la forme d'une matrice de rendement, affecte à des combinaisons d'au moins un paramètre d'entraînement (11) du premier composant d'entraînement (1) et d'au moins un paramètre d'entraînement (12) du deuxième composant d'entraînement (2) un rendement respectif de la combinaison d'au moins le premier composant d'entraînement (1) et le deuxième composant d'entraînement (2),
et/ou
**en ce que** la routine (9) est configurée pour adapter au moins un paramètre d'entraînement (11, 12, 13) d'au moins un composant d'entraînement (1, 2, 3), lorsque le rendement de la combinaison d'au moins les premier et deuxième composants d'entraînement (1, 2) est inférieur à une valeur prédéterminée et/ou tombe en dessous d'une valeur prédéterminée pendant le fonctionnement de la machine de formage (5).

2. Machine de formage selon la revendication 1, **caractérisée en ce que** la routine (9) est configurée
en fonction d'au moins un paramètre de pièce à usiner (16), en particulier l'épaisseur de pièce à usiner et/ou le matériau de pièce à usiner et/ou la forme de pièce à usiner,
et/ou
en fonction d'au moins un paramètre de cintrage (17), en particulier de l'angle de cintrage et/ou de la profondeur d'immersion et/ou de la force de formage,
et/ou
en fonction d'une phase de fonctionnement (18) de la machine de formage (5), en particulier de la phase d'alimentation et/ou de la phase de formage, pour sélectionner et/ou déterminer le au moins un paramètre d'entraînement (11) du premier composant d'entraînement (1) et le au moins un paramètres d'entraînement (12) du deuxième composant d'entraînement (2).

3. Machine de formage selon la revendication 1 ou 2, **caractérisée en ce que** la routine (9) comprend au moins une affectation de paramètres, en particulier sous la forme d'un ensemble de données et/ou d'une prescription de calcul et/ou d'une fonction, qui affecte à des paramètres de pièce à usiner (16) et/ou des paramètres de cintrage (17) et/ou des phases de fonctionnement (18) de la machine de formage (5) respectivement au moins un paramètre d'entraînement (11) du premier composant d'entraînement (1) et au moins un paramètre d'entraînement (12) du deuxième composant d'entraînement (2).

4. Machine de formage selon l'une quelconque des revendications précédentes, **caractérisée en ce que** la routine (9) est agencée pour sélectionner, pour des paramètres de pièce à usiner prédéfinis (16) et/ou des paramètres de cintrage prédéfinis (17) et/ou une phase de fonctionnement prédéfinie (18), le ou les paramètres d'entraînement (11) du premier composant d'entraînement (1) et le ou les paramètres d'entraînement (12) du deuxième composant d'entraînement (2), de telle sorte que le rendement de la combinaison d'au moins le premier composant d'entraînement (1) et le deuxième composant d'entraînement (2) et/ou le rendement de l'ensemble de la chaîne cinématique (4) soit supérieur à 0,8 et/ou présente un maximum.

5. Machine de formage selon l'une quelconque des revendications précédentes, **caractérisée en ce que** la machine de formage (5) comprend au moins un capteur (10) pour détecter une grandeur d'entraînement, en particulier un couple, une pression, une force de formage et/ou une position de la première partie de machine (6) par rapport à la seconde partie de machine (7),
et/ou
comprend au moins un capteur (20) pour détecter une propriété de pièce à usiner, en particulier avant et/ou pendant le processus de formage, dans laquelle le au moins un capteur (10, 20) est connecté en communication à la commande (8) et les données de capteur du au moins un capteur (10, 20) et/ou une ou plusieurs grandeurs dérivées des données du capteur sont une ou plusieurs grandeurs d'entrée de la routine (9).

6. Machine de formage selon l'une quelconque des revendications précédentes, **caractérisée en ce que** la machine de formage (5) présente au moins une interface d'entrée (19) pour entrer des paramètres de pièce à usiner (16) et/ou des paramètres de cintrage (17), dans laquelle les paramètres de pièce à usiner (16) et/ou les paramètres de cintrage (17) sont des grandeurs d'entrée de la routine (9).

7. Machine de formage selon l'une quelconque des revendications précédentes, **caractérisée en ce que** la routine (9) est agencée pour modifier également au moins un paramètre d'entraînement (12) du deuxième composant d'entraînement (2) au cours de la modification d'au moins un paramètre d'entraînement (11) du premier composant d'entraînement (1).

8. Machine de formage selon l'une quelconque des revendications précédentes, **caractérisée en ce que** dans la commande (8) sont représentées au moins deux phases de fonctionnement, en particulier une phase de formage et une phase d'avance, qui se distinguent par la force de formage et/ou la vitesse d'avance entre la première et la seconde partie de machine (6, 7), dans laquelle la routine (9) est configurée pour spécifier différents paramètres d'entraînement (11) du premier composant d'entraînement (1) de la chaîne cinématique (4) et différents paramètres d'entraînement (12) d'un deuxième composant d'entraînement (2) de la chaîne cinématique (4) en fonction de la phase de fonctionnement respective.

9. Machine de formage selon l'une quelconque des revendications précédentes, **caractérisée en ce que** la chaîne cinématique (4) comprend une unité cylindre-piston (14) qui peut être soumise à une pression par le premier composant d'entraînement (1) et/ou le deuxième composant d'entraînement (2).

10. Machine de formage selon l'une quelconque des revendications précédentes, **caractérisée en ce que** le premier composant d'entraînement (1) et le deuxième composant d'entraînement (2) sont connectés en série dans la chaîne cinématique (4).

11. Machine de formage selon l'une quelconque des revendications précédentes, **caractérisée en ce que** le premier composant d'entraînement (1) comprend un moteur, de préférence un servomoteur, dans laquelle de préférence un paramètre d'entraînement (11) du premier composant d'entraînement (1), qui peut être réglé par la commande (8) selon la routine (9), est la vitesse de rotation et/ou le couple de rotation du moteur.

12. Machine de formage selon la revendication 11, **caractérisée en ce que**
le deuxième composant d'entraînement (2) comprend une pompe entraînée par le moteur, en particulier une pompe de régulation, dans laquelle de préférence un paramètre d'entraînement (12) du deuxième composant d'entraînement (2) pouvant être réglé par la commande (8) conformément à la routine (9) est le débit volumétrique de refoulement,
et/ou
**en ce que** le deuxième composant d'entraînement (2) comprend une boîte de vitesses mécanique, dans laquelle de préférence un paramètre d'entraînement (12) du deuxième composant d'entraînement (2) pouvant être réglé par la commande (8) conformément à la routine (9) est en partie le rapport de transmission de la boîte de vitesses.

13. Machine de formage selon la revendication 12, **caractérisée en ce que** la routine est agencée, dans au moins un mode de fonctionnement de la machine de formage (5), dans le cadre de l'augmentation de la vitesse de rotation du moteur que comprend la première unité d'entraînement (1), pour réduire le débit volumique de refoulement de la pompe que comprend le deuxième composant d'entraînement (2)
et/ou
dans le cadre de la réduction de la vitesse de rotation du moteur que comprend la première unité d'entraînement (1), pour augmenter le débit volumétrique de la pompe que comprend le deuxième composant d'entraînement (2).

14. Machine de formage selon l'une quelconque des revendications précédentes, **caractérisée en ce qu'**au moins un paramètre d'entraînement (13) d'un troisième composant d'entraînement (3) de la chaîne cinématique d'entraînement (4) peut être réglé par la commande (8), dans laquelle le au moins un paramètre d'entraînement (13) du troisième composant d'entraînement (3) est prédéfini par la routine (9) dans au moins un mode de fonctionnement de la machine de formage (5).

15. Machine de formage selon la revendication 14, **caractérisée en ce que** le troisième composant d'entraînement (3) comprend une soupape, dans laquelle de préférence un paramètre d'entraînement (13) du troisième composant d'entraînement (3) pouvant être réglé par la commande (8) conformément à la routine (9) est la position de soupape.

16. Machine de formage selon l'une quelconque des revendications précédentes, **caractérisée en ce que** la première partie de machine (6) et/ou la seconde partie de machine (7) comprennent un support d'outil de formage et/ou au moins un outil de formage.

17. Procédé permettant de faire fonctionner une machine de formage (5) pour le formage de pièces à usiner (15), en particulier une machine à cintrer pour le cintrage de pièces à usiner, en particulier de pièces à usiner en forme de tôle, dans lequel la machine de formage (5) comprend
- une première partie de machine (6),
- une seconde partie de machine (7),
- une commande (8) et
- un système d'entraînement pour déplacer la première partie de machine (6) par rapport à la seconde partie de machine (7) et pour générer la force de formage, dans lequel le système d'entraînement comprend une chaîne cinématique (4) formée d'au moins deux composants d'entraînement (1, 2, 3),
**caractérisé en ce que** la machine de formage (5) selon l'une quelconque des revendications précédentes est réalisée et **en ce qu'**au moins un paramètre d'entraînement (11) d'un premier composant d'entraînement (1) de la chaîne cinématique (4) et au moins un paramètre d'entraînement (12) d'un deuxième composant d'entraînement (2) de la chaîne cinématique (4) peuvent être réglés par la commande (8), dans lequel une routine (9) pour optimiser l'efficacité énergétique et/ou le rendement du système d'entraînement est enregistrée dans la commande (8) et le au moins un paramètre d'entraînement (11) du premier composant d'entraînement (1) et le au moins un paramètre d'entraînement (12) du deuxième composant d'entraînement (2) sont prédéfinis par la routine (9) dans au moins un mode de fonctionnement de la machine de formage (5).
